# EUROPÄISCHE PATENTSCHRIFT

(11) **EP 0 882 899 B1**
(45) Veröffentlichungstag und Bekanntmachung des Hinweises auf die Patenterteilung: **28.11.2001**
(21) Anmeldenummer: 98108236.5
(22) Anmeldetag: 06.05.1998
(51) Int. Cl.: F16C 1/12, G05G 1/04, F16B 21/18

(54) **Betätigungseinrichtung für einen Bowdenzug**
Operating device for a bowden cable
Dispositif de manoeuvre pour câble bowden

(30) Priorität: 04.06.1997 DE 19723376
(43) Veröffentlichungstag der Anmeldung: 09.12.1998
(73) Patentinhaber: Volkswagen Aktiengesellschaft, 38436 Wolfsburg (DE)
(72) Erfinder: Meissner, Klaus, 38124 Braunschweig (DE); Meyer, Dieter, 38442 Wolfsburg (DE); Bekemeier, Frank, 38533 Rethen (DE)

(56) Entgegenhaltungen:
- EP-A- 0 083 451
- US-A- 3 828 624
- US-A- 4 007 645
- US-A- 4 013 155
- US-A- 5 131 785

## Beschreibung

Die Erfindung betrifft eine im Oberbegriff des Patentanspruchs 1 näher beschriebene Betätigungseinrichtung für einen Bowdenzug. Solch eine Einrichtung dient beispielsweise in einem Automobil dazu, die Verriegelung der Motor- oder Gepäckraumklappe vom Fahrgastraum aus lösen zu können. Sie ist häufig mit ihrer Konsole an der Karosserieseitenwand im Fußraum des Fahrers angeordnet, von wo der Bowdenzug bis zum Klappenschloß verläuft. Durch Verschwenken des Hebels gegen die Kraft einer Rückstellfeder aus seiner Ruhestellung in eine Auslösestellung wird über den Bowdenzug die Verriegelung aufgehoben.

Bei einer aus offenkundiger Benutzung bekannten Einrichtung der im Oberbegriff des Patentanspruchs 1 beschriebenen Art ist die Einhängevorrichtung in den Hebel integriert, der demzufolge mit der Einhängevorrichtung eine einteilige Hebelanordnung bildet. Mit dieser Hebelanordnung ist die Konsole von der Rückseite her gelenkig verschraubt, so daß die Gelenkschraube im Einbauzustand der Einrichtung nicht sichtbar ist. Über zwei Befestigungslöcher in der Konsole wird die Einheit aus Konsole und Hebelanordnung mit weiteren Schrauben an der Karosserie befestigt.

Diese bekannte Einrichtung, d. h. die Einheit aus Konsole und Hebelanordnung, baut stark auf, so daß sie bisweilen störend in den Fahrgastraum ragt. Außerdem sind nicht nur die Befestigungsschrauben sichtbar, sondern auch der Bowdenzug selbst, zumindest sein Befestigungsbereich an der Einrichtung. Gerade bei höherwertig ausgestatteten Fahrzeugen können sich diese Faktoren nachteilig auswirken.

Aus den amerikanischen Patentschriften US 4, 007, 645 A und US 3, 828, 624 A sind Betätigungseinrichtungen für Bowdenzüge bekannt mit mehrteiligen scheiben- oder radförmigen Aufnahmen und Führungen für die Bowdenzugenden, die durch zusätzlich zum jeweiligen Betätigungshebel vorhandene Teile gebildet werden. Der Betätigungshebel wird unter Verwendung von Schrauben nachträglich an der Vorrichtung zur Aufnahme des Bowdenzugendes festgelegt. Dabei kann zur Drehsicherung auch eine Stirnverzahnung Einsatz finden (US 4, 007, 645 A). Diese Betätigungseinrichtungen unterscheiden sich also von der erwähnten offenkundig vorbenutzten Einrichtung durch die zwangsläufige Mehrteiligkeit der dort verwendeten Teileinrichtung zur Aufnahme bzw. Festlegung des Bowdenzugendes.

Bekannt sind auch radial aufschiebbare Sicherungselemente zur Verhinderung der Trennung ineinandergesteckter Bauteile durch Relativbewegung in axialer Richtung, siehe die allerdings nicht Betätigungseinrichtungen für einen Bowdenzug betreffenden Druckschriften US 5, 131, 795 A und EP 0 083 451 A1.

Die Nachteile der offenkundig vorbenutzten Einrichtung werden mit den kennzeichnenden Merkmalen des Patentanspruchs 1 vermied vorteilhafte Ausgestaltungen der Erfindung sind Gegenstand der Unteransprüche.

Ein Ausführungsbeispiel der Erfindung wird anhand der Zeichnung nachfolgend näher erläutert. Darin zeigen
- Figur 1: in Explosionsdarstellung eine erfindungsgemäße Betätigungseinrichtung für einen Bowdenzug, der sich vom Innenraum eines Fahrzeuges bis zum Schloß des Motorraumdeckels erstreckt und über den die Verriegelung des Motorraumdeckels aufgehoben werden kann;
- Figur 2: die Einrichtung aus Figur 1 (ohne die darin gezeichnete Konsole) im zusammengebauten Zustand mit in Sicherungsstellung befindlichem Sicherungselement;
- Figur 3: die Einrichtung wie in Figur 2, jedoch mit in Entsicherungsstellung befindlichem Sicherungselement;
- Figur 4: die Einrichtung wie in Figur 2, jedoch im Einbauzustand, weshalb in dieser Darstellung von der Einrichtung nur der Betätigungshebel zu sehen ist, während der übrige Teil verdeckt hinter einer Wandverkleidung liegt, wobei der Betätigungshebel sich in Schließstellung befindet,
und
- Figur 5: die in Figur 4 dargestellte Ansicht, wobei sich jetzt der Betätigungshebel in Öffnungsstellung befindet.

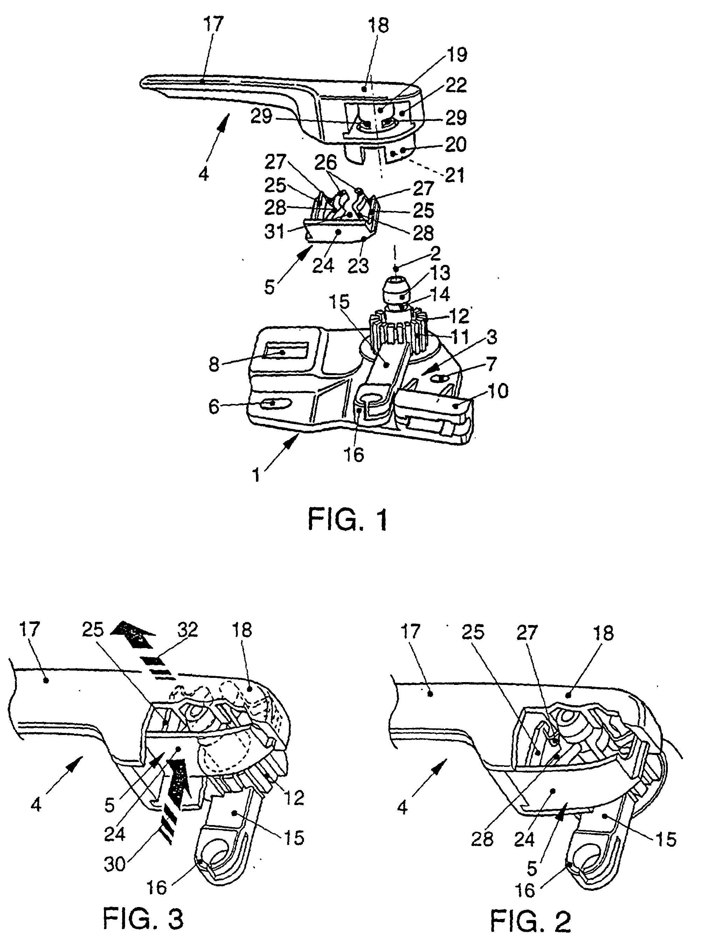

Der Aufbau der Betätigungseinrichtung soll zunächst mit Bezug auf Figur 1 erklärt werden, in der die wesentlichen Teile auseinandergezogen gezeichnet und somit besser zu erkennen sind. Die Hauptbestandteile der Einrichtung sind eine an einem Karosserieblech, beispielsweise an der A-Säule, zu befestigende Konsole 1, eine darauf um eine Achse 2 schwenkbar befestigte Einhängevorrichtung 3 für den zeichnerisch nicht dargestellten Bowdenzug, ein ebenfalls um die Achse 2 schwenkbarer Hebel 4, der drehfest mit der Einhängevorrichtung 3 verbindbar ist, und ein Sicherungselement 5 zur Sicherung der Verbindung zwischen der Einhängevorrichtung 3 und dem Hebel 4.

Die Konsole 1 weist zwei Löcher 6, 7 (von denen wenigstens eins ein Langloch ist) zur Verschraubung mit dem Karosserieblech sowie eine Aussparung 8 auf, in die eine Wandverkleidung 9, auf die weiter unten noch näher eingegangen wird, eingeclipst wird. Ein weiteres, in der Zeichnung nicht erkennbares Loch in der Konsole 1 dient der schwenkbaren Befestigung der Einhängevorrichtung 3 an der Konsole 1, die dazu von ihrer Rückseite her mit der Einhängevorrichtung 3 verschraubt wird. Diese Verschraubung muß natürlich vor der Befestigung der Konsole 1 an dem Karosserieblech erfolgen. Mit 10 ist ein Führungs- und Abstützteil für den Bowdenzug bezeichnet, das an die Grundplatte der Konsole 1 angeformt ist.

Die Einhängevorrichtung 3 besteht aus einem zylindrischen, an seinem Umfang ein Verzahnungsprofil 11 aufweisenden Mitnehmer 12, aus dem zentrisch angeordnet ein Zapfen 13 mit einem Hinterschnitt 14 hervorsteht. Die gemeinsame Achse von Mitnehmer 12 und Zapfen 13 fällt mit der Achse 2 zusammen. In axialer Erstreckung ist an den Mitnehmer 12 ein Arm 15 angeformt, dessen freies Ende 16 zur Aufnahme eines der Enden des Bowdenzuges ausgebildet ist.

Der Hebel 4 besteht aus einem Griffteil 17 und einem Kopfteil 18, der zusammen mit dem Zapfen 13 und dem Mitnehmer 12 als Steckverbindung ausgebildet ist. Dazu weist der Kopfteil 18 eine dem Zapfen 13 zugeordnete Führungshülse 19 und einen dem Mitnehmer 12 zugeordneten Abschnitt 20 auf, der mit einem Innenprofil 21 versehen ist, das ein Gegenprofil zu dem Verzahnungsprofil 11 darstellt.

In dem Kopfteil 18 ist eine Aussparung 22 vorgesehen, in die das Sicherungselement 5 einschiebbar ist. Das Sicherungselement 5 umfaßt einen U-förmigen Grundkörper 23 mit einer Basis 24 und zwei Schenkeln 25, zwischen denen ein Rastelementenpaar 26 über vordere und hintere Stege 27, 28 elastisch an den Grundkörper 23 angeformt ist. Beim Einschieben des Sicherungselementes 5 in die zusammengesteckte Einheit aus dem Hebel 4 einerseits und dem Zusammenbau von Konsole 1 und Einhängevorrichtung 3 andererseits durchsetzen die Rastelemente 26 zwei Aussparungen 29 in der Führungshülse 19, werden dabei etwas auseinandergedrückt und rasten beim weiteren Einschieben in den Hinterschnitt 14 am Zapfen 13 ein. In dieser Sicherungsstellung des Sicherungselementes 5 paßt sich die Basis 24 der Kontur des Kopfteils 18 an, wie in Figur 2 dargestellt; eine Demontage des Hebels 4 durch Abziehen in Achsrichtung ist nicht möglich. Beim weiteren Hineinschieben des Sicherungselementes 5 - entsprechend dem Pfeil 30 in Figur 3 - wird die Rastverbindung wieder aufgehoben, der Zapfen 13 befindet sich jetzt innerhalb einer von den hinteren Stegen 28 und der Basis 24 begrenzten Fläche 31, die so bemessen ist, daß der Zapfen 13 darin axial frei verschiebbar ist. In dieser Position des Sicherungselementes 5 kann - entsprechend dem Pfeil 32 in Figur 3 - der Hebel 4 abgezogen werden. Eine Entsicherung und eine damit mögliche Demontage des Hebels kann auch dadurch herbeigeführt werden, daß das Sicherungselement 5, ausgehend von der in Figur 2 gezeigten Sicherungsstellung, nicht in Pfeilrichtung (Pfeil 30, Figur 3) verschoben, sondern in entgegengesetzter Richtung aus dem Kopfteil 18 herausbewegt wird. Auch dabei wird die Verbindung Rastelemente 26 / Zapfen 13 frei, und der Hebel 4 kann bei Bedarf durch Abziehen in Richtung des Pfeiles 32 demontiert werden.

Zum Zwecke der Demontage des Sicherungselementes 5 ist die Basis 24 seines Grundkörpers 23 so bemessen, daß ihre Höhe einige Millimeter geringer ist als die Höhe der Aussparung 22 in dem Kopfteil 18. Auf diese Weise verbleibt zwischen der Oberkannte der Basis 24 und der Oberkannte der Aussparung 22 eine freie Restfläche, durch die hindurch die Basis 24 - ggf. mit einem geeigneten Werkzeug - hintergriffen und das Sicherungselement 5 entgegen der Pfeilrichtung (Pfeil 30, Figur 3) verschoben werden kann.

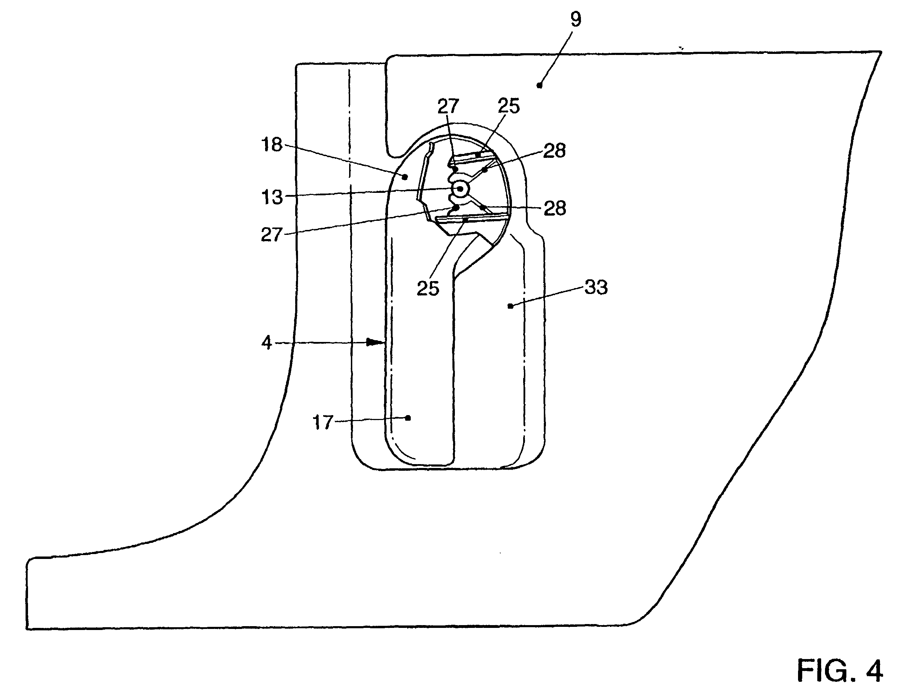

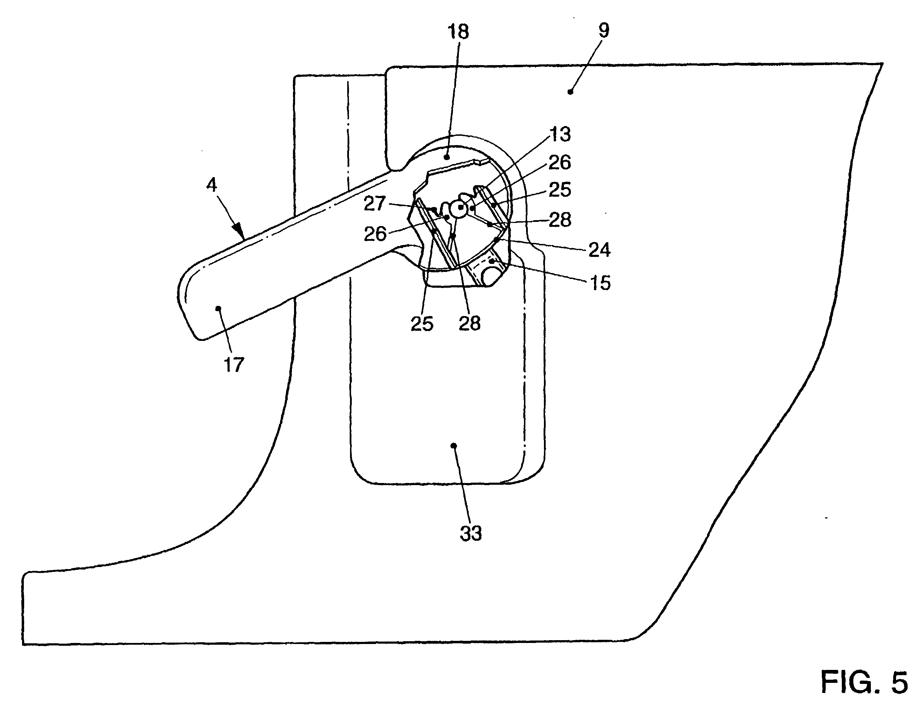

Wie bereits erwähnt, zeigen die Figuren 4 und 5 die Betätigungseinrichtung im Einbauzustand in einem Fahrzeug. Dabei sind alle wesentlichen Bestandteile der Betätigungseinrichtung - bis auf den Betätigungshebel 4 - von der an der A-Säule befestigten, bereits weiter oben erwähnten Wandverkleidung 9 verdeckt. Der Hebel 4 ist einmal (Figur 4) in Schließlage und das andere mal (Figur 5) in Öffnungsstellung gezeichnet. In Schließlage liegt der Hebel 4 bündig in einer Griffmulde 33 der Wandverkleidung 9. Durch die aufgebrochene Darstellung in einem Bereich des Kopfteils 18 erkennt man, wie das Rastelementenpaar 26 den Zapfen 13 umschließt und so die Sicherung der Steckverbindung gewährleistet.

In der Öffnungsstellung des Hebels 4 - und nur dann - läßt sich das Sicherungselement 5 aus seiner in Figur 5 gezeichneten Sicherungsstellung in eine Entsicherungsstellung verschieben, entweder durch weiteres Hineindrücken des Sicherungselementes 5, wodurch der Zapfen 13 in die Fläche 31 zu liegen kommt, oder durch Herausziehen des Sicherungselementes 5, wodurch die Verbindung zwischen dem Zapfen 13 und dem Rastelementenpaar 26 ebenfalls aufgehoben wird. In Schließlage des Hebels 4 gemäß Figur 4 ist das Sicherungselement 5 wegen des benachbarten Randbereiches der Griffmulde 33 nicht zugänglich.

## Patentansprüche

1. Einrichtung zur Betätigung eines Bowdenzugs, insbesondere in einem Fahrzeug, enthaltend eine zur Befestigung auf einer Wand, insbesondere einer Karosseriewand, eingerichtete (6, 7) Konsole (1), eine schwenkbar auf der Konsole (1) auf ihrer der Wand abgekehrten Seite befestigte schwenkbare Hebelanordnung (4) mit einem Griff (17) sowie eine Einhängevorrichtung (3) für ein Ende des Bowdenzugs, die einen einenends in Schwenkverbindung mit der Hebelanordnung (4) stehenden, anderenends eine Aufnahme (16) für das Ende des Bowdenzugs aufweisenden Schwenkarm (15) enthält, **dadurch gekennzeichnet, daß** die Hebelanordnung (4) und der Schwenkarm (15) als separate Teile ausgebildet sind, deren Schwenkverbindung als nachträglich senkrecht zur Konsole (1) herstellbare Steckverbindung ausgebildet ist mit einem ein Rundprofil aufweisenden Abschnitt (20) an der Hebelanordnung (4) und einem Mitnehmer (12) an dem einen Ende des Schwenkarms (15), wobei der Abschnitt (20) und der Mitnehmer (12) auf ihren Umfängen für gegenseitigen Eingriff nach Art einer Kerbverzahnung ausgelegt sind, und daß die Hebel anordnung (4) und die Bowdenzugaufnahme (16) senkrecht zur Konsole (1) einen gegenseitigen Versatz zur Unterbringung einer Wandverkleidung (9) aufweisen.

2. Einrichtung nach Anspruch 1, **dadurch gekennzeichnet, daß** der Steckverbindung ein axial wirksames Sicherungselement (5) zugeordnet ist, das einen U-förmigen Grundkörper (23) aufweist und zwei sich in einem Abstand gegenüberliegende, im Sinne einer Vergrößerung des Abstands elastisch nachgiebige, über vordere (27) und hintere Stege (28) an den Schenkeln (25) des U parallel zur Ebene des U verlaufend befestigte Rastelemente (26) enthält, die im Sicherungszustand einen Hinterschnitt (14) an einem an der Einhängevorrichtung (3) angeformten Zapfen (13) elastisch umgreifen.

3. Einrichtung nach Anspruch 2, **dadurch gekennzeichnet, daß** die Achse des Zapfens (13) mit einer Schwenkachse (2) der Hebelanordnung (3, 4) zusammenfällt.

4. Einrichtung nach Anspruch 2 oder 3, **dadurch gekennzeichnet, daß** die hinteren Stege (28) und die Basis (24) des U (23) eine Fläche (31) begrenzen, deren Querschnitt größer ist als der größte Querschnitt des freien Endbereichs des Zapfens (13).

5. Einrichtung nach einem der Ansprüche 2 bis 4, **dadurch gekennzeichnet, daß** dem Zapfen (13) eine am Hebel (4) angeformte Führungshülse (19) zugeordnet ist, in die der Zapfen (13) bei der Montage des Sicherungselements (5) eintaucht.

6. Einrichtung nach Anspruch 5, **dadurch gekennzeichnet, daß** die Führungshülse (19) an ihrem Umfang Aussparungen (29) zur Montage des Sicherungselements (5) aufweist.

7. Einrichtung nach einem der Ansprüche 2 bis 6, **dadurch gekennzeichnet, daß** im Sicherungszustand des Sicherungselements (5) die Kontur der Basis (24) des Grundkörpers (23) mit der Kontur des Hebels (4) im Bereich einer zum Einschieben des Sicherungselements (5) bestimmten Aussparung (22) im Hebel (4) zusammenfällt.

8. Einrichtung nach einem der Ansprüche 2 bis 7, **dadurch gekennzeichnet, daß** die Basis (24) des Grundkörpers (23) so bemessen ist, daß sie die für das Sicherungselement (5) bestimmte Aussparung (22) im Hebel (4) bis auf eine Restfläche ausfüllt.

9. Einrichtung nach einem der Ansprüche 2 bis 8, **dadurch gekennzeichnet, daß** zur Demontage des Sicherungselements (5) bzw. zur Aufhebung des Sicherungszustands das Sicherungselement (5) im Bereich der Basis (24) seines Grundkörpers (23) eine Zone zum Angriff eines Werkzeugs aufweist.

10. Einrichtung nach Anspruch 8 oder 9, **dadurch gekennzeichnet, daß** die Zone von dem der Restfläche benachbarten Randbereich der Basis (24) des Grundkörpers (23) gebildet ist.

## Claims

1. Device for actuating a Bowden cable, in particular in a vehicle, comprising a bracket (1) which is set up (6, 7) for fastening on a wall, in particular a vehicle body wall, a pivotable lever arrangement (4) which is fastened pivotably on the bracket (1), on its side facing away from the wall, and has a handle (17), and also comprising an attachment device (3) for one end of the Bowden cable, which device has a pivoting arm (15) which is in pivoting connection with the lever arrangement (4) at one end and has a holder (16) for the end of the Bowden cable at the other end, **characterized in that** the lever arrangement (4) and the pivoting arm (15) are designed as separate parts whose pivoting connection is designed as a plug-in connection which can be produced subsequently perpendicularly with respect to the bracket (1) and has a section (20) on the lever arrangement (4), which section has a round profile, and a driver (12) at the one end of the pivoting arm (15), the section (12) and the driver (12) being designed on their circumferences in the manner of a serration for mutual engagement, and **in that** the lever arrangement (4) and the Bowdencable holder (16) have, perpendicularly with respect to the bracket (1), a mutual offset for accommodating a wall lining (9).

2. Device according to Claim 1, **characterized in that** the plug-in connection is assigned an axially effective securing element (5) which has a U-shaped base body (23) and two latching elements (26) which lie at a distance opposite each other, are elastically flexible, with the effect of enlarging the distance, are fastened via front webs (27) and rear webs (28) to the limbs (25) of the U, and running parallel to the plane of the U, and in the securing state grip elastically around an undercut (14) on a pin (13) integrally formed on the attachment device (3).

3. Device according to Claim 2, **characterized in that** the axis of the pin (13) coincides with a pivoting axis (2) of the lever arrangement (3, 4).

4. Device according to Claim 2 or 3, **characterized in that** the rear webs (28) and the base (24) of the U (23) bound an area (31) whose cross section is larger than the largest cross section of the free end region of the pin (13).

5. Device according to one of Claims 2 to 4,
**characterized in that** the pin (13) is assigned a guide sleeve (19) which is integrally formed on the lever (4) and into which the pin (13) dips during the installation of the securing element (5).

6. Device according to Claim 5, **characterized in that** the guide sleeve (19) has, on its circumference, recesses (29) for the installation of the securing element (5).

7. Device according to one of Claims 2 to 6,
**characterized in that**, in the securing state of the securing element (5), the contour of the base (24) of the base body (23) coincides with the contour of the lever (4) in the region of a recess (22) in the lever (4), which recess is intended for the insertion of the securing element (5).

8. Device according to one of Claims 2 to 7,
**characterized in that** the base (24) of the base body (23) is dimensioned in such a manner that it fills, apart from a residual area, the recess (22) in the lever (4), which recess is intended for the securing element (5).

9. Device according to one of Claims 2 to 8,
**characterized in that**, in order to remove the securing element (5) or in order to cancel the securing state, the securing element (5) has, in the region of the base (24) of its base body (23), a zone for the engagement of a tool.

10. Device according to Claim 8 or 9, **characterized in that** the zone is formed by that edge region of the base (24) of the base body (23) which is adjacent to the residual area.

## Revendications

1. Dispositif de manoeuvre d'un câble Bowden, en particulier dans un véhicule, comprenant une console (1) agencée (6, 7) pour être fixée sur une paroi, en particulier une paroi de carrosserie, un dispositif de levier pivotant (4) avec une poignée (17), fixé de manière pivotante sur la console (1) sur son côté opposé à la paroi, ainsi qu'un dispositif de suspension (3) pour une extrémité du câble Bowden, qui comporte un bras pivotant (15) monté à une première extrémité en assemblage pivotant avec le dispositif de levier (4) et présentant à l'autre extrémité un logement (16) pour l'extrémité du câble Bowden, **caractérisé en ce que** le dispositif de levier (4) et le bras pivotant (15) sont des pièces séparées, dont l'assemblage pivotant est formé par un assemblage à emboîtement réalisable a posteriori perpendiculairement à la console (1), avec une portion (20) présentant un profil rond sur le dispositif de levier (4) et une pièce d'entraînement (12) sur la première extrémité du bras pivotant (15), la portion (20) et la pièce d'entraînement (12) étant conçues à leur pourtour pour un engrènement mutuel à la manière d'une denture, et **en ce que** le dispositif de levier (4) et le logement du câble Bowden (16) présentent perpendiculairement à la console (1) un déport mutuel pour la pose d'un habillage de paroi (9).

2. Dispositif suivant la revendication 1, **caractérisé en ce que** l'assemblage à emboîtement est associé à un élément de serrage actif (5) qui présente un corps de base (23) en forme de U et qui comporte deux éléments d'encliquetage (26) se faisant face à distance, déformables élastiquement dans le sens d'une augmentation de la distance, fixés par des lamelles avant (27) et arrière (28) aux branches (25) du U et orientées parallèlement au plan du U, qui accrochent élastiquement en position de serrage une saignée (14) sur un tourillon (13) façonné sur le dispositif de suspension (3).

3. Dispositif suivant la revendication 2, **caractérisé en ce que** l'axe du tourillon (13) coïncide avec un axe de pivotement (2) du dispositif de levier (3, 4).

4. Dispositif suivant la revendication 2 ou 3,
**caractérisé en ce que** la lamelle arrière (28) et le socle (24) du U (23) délimitent une face (31), dont la section transversale est plus grande que la plus grande section transversale de la zone d'extrémité libre du tourillon (13).

5. Dispositif suivant l'une quelconque des revendications 2 à 4, **caractérisé en ce que** le tourillon (13) est associé à une douille de guidage (19) façonnée sur le levier (4), dans laquelle le tourillon (13) plonge lors du montage de l'élément de serrage (5).

6. Dispositif suivant la revendication 5, **caractérisé en ce que** la douille de guidage (19) présente à sa périphérie des évidements (29) pour le montage de l'élément de serrage (5).

7. Dispositif suivant l'une quelconque des revendications 2 à 6, **caractérisé en ce qu'**en position de serrage de l'élément de serrage (5), le contour du socle (24) du corps de base (23) coïncide avec le contour du levier (4) dans la région d'un évidement (22) dans le levier (4) destiné à insérer l'élément de serrage (5).

8. Dispositif suivant l'une quelconque des revendications 2 à 7, **caractérisé en ce que** le socle (24) du corps de base (23) est dimensionné de telle manière qu'il remplisse l'évidement (22) dans le levier (4) destiné à l'élément de serrage (5) jusqu'à une face d'appui.

9. Dispositif suivant l'une quelconque des revendications 2 à 8, **caractérisé en ce que** l'élément de serrage (5) présente, dans la région du socle (24) de son corps de base (23), une zone pour l'application d'un outil, en vue du démontage de l'élément de serrage (5), ou pour libérer la position de serrage.

10. Dispositif suivant la revendication 8 ou 9,
**caractérisé en ce que** la zone est formée par la région du bord du socle (24) du corps de base (23) voisine de la face d'appui.
